# EUROPEAN PATENT APPLICATION

(11) **EP 2 572 773 A1**
(43) Date of publication of application: **27.03.2013**
(21) Application number: 10851724.4
(22) Date of filing: 27.12.2010
(51) Int. Cl.: B01D 53/50, B01D 53/18, B01D 53/64, B01D 53/77, F23C 9/08, F23J 15/00, F23L 7/00

(54) **FLUE GAS DESULFURIZATION DEVICE, COMBUSTION SYSTEM AND COMBUSTION METHOD**

(30) Priority: 18.05.2010 JP 2010114020
(71) Applicant: Babcock-Hitachi Kabushiki Kaisha, Chiyoda-ku Tokyo 101-0021 (JP); Nosaka, Hiroyuki, Kure-shi, Hiroshima 7378508 (JP)
(72) Inventor: NOSAKA, Hiroyuki, Kure-shi Hiroshima 737-8508 (JP); MITSUI, Yoshiaki, Kure-shi Hiroshima 737-8508 (JP); KIKKAWA, Hirofumi, Kure-shi Hiroshima 737-8508 (JP); IMADA, Noriyuki, Kure-shi Hiroshima 737-8508 (JP); ODA, Naoki, Kure-shi Hiroshima 737-8508 (JP); NAKAMOTO, Takanori, Kure-shi Hiroshima 737-8508 (JP)
(74) Representative: TBK
(86) International application number: PCT/JP2010/007554
(87) International publication number: WO 2011/145160

(57) **Abstract**

Disclosed is a desulfurization device that releases exhaust gas from the desulfurization device into the atmosphere without reduction in CO₂ recovery rate and without mercury components, and a combustion system that uses said desulfurization device. Because the absorbent (6) of the desulfurization device is drawn from an absorbent reservoir (11) by a circulating pump (5) and sprayed through spray nozzles (4) into a desulfurization-absorption unit (26) and, in the absorbent reservoir (11), is mainly circulated outside the wall of a water seal tube (7) by a stirrer (10), the flow of the absorbent (6) that falls from the desulfurization-absorption unit (26) into the water seal tube (7) flows in a single direction from top to bottom and hinders the ascension of gas bubbles. Intermixing of the gas (27) for oxidizing the sulfur dioxide, which is generated in the absorbent, with the desulfurization device exhaust gas (2) is thereby prevented, efficient CO₂ recovery is possible without reduction in the CO₂ concentration recovered from the exhaust gas after desulfurization by the CO₂ recovery device (17) and mercury in the combustion exhaust gas is absorbed in the absorbent of the desulfurization device (3) and is not released directly into the atmosphere.

## Description

### TECHNICAL FIELD

The present invention relates to a wet flue gas desulfurization device (which may be simply referred to as a desulfurization device hereinafter) which is provided to the thermal power generation boiler plant etc. which performs oxygen combustion, and recovers CO₂ in combustion exhaust gas and removes mercury by a CO₂ recovery device on the downstream side of the desulfurization device, a combustion system and the combustion method including the desulfurization device.

### BACKGROUND OF THE INVENTION

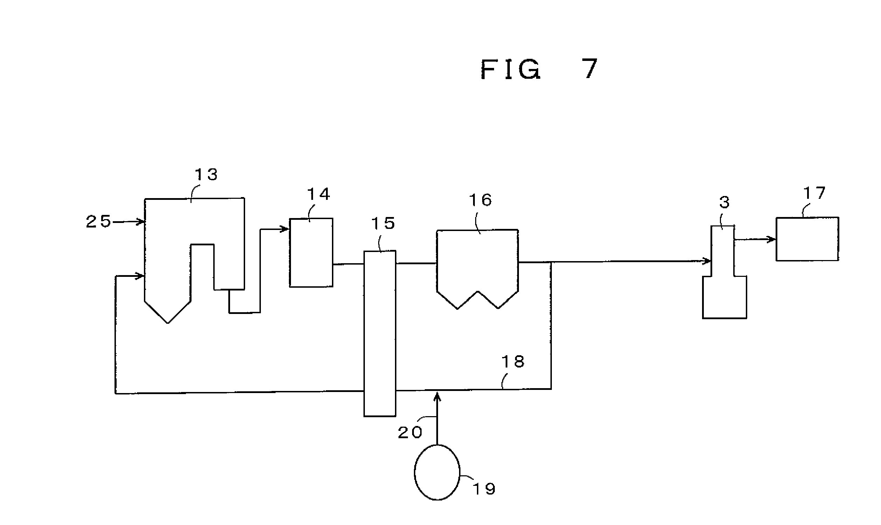

FIG. 7 shows an example of a thermal power generation boiler plant, which uses coal as fuel and performs oxygen combustion on the presumption that CO₂ in combustion exhaust gas is recovered by a CO₂ recovery device arranged on the downstream side of the boiler, in thermal power generation boiler plants.
The thermal power generation boiler plant shown in FIG. 7 is constituted of a boiler 13, a denitration device 14, a heat exchanger 15, a dust collection device 16, a desulfurization device 3, a CO₂ recovery device 17, a circulation line 18, an oxygen production device 19, an oxygen supply line 20, and others.

The boiler 13 performs oxygen combustion of fuel 25 such as coal supplied through a fuel supply system and thereby generates exhaust gas. At this time, oxygen is supplied from the oxygen supply line 20 or the like by the oxygen production device 19.
The denitration device 14 decomposes NOx (nitrogen oxide) contained in a gas discharged from the boiler 13. The gas discharged from the denitration device 14 is adjusted to 200°C to 160°C by the heat exchanger 15.

Smoke dust is removed from the gas by the dust collection device 16. A part of the gas subjected to dust removal by the dust collection device 16 is introduced into the desulfurization device 3, and SO₂ is removed. Further, the CO₂ recovery device 17 recovers CO₂ from the exhaust gas from which SO₂ has been removed.
A part of the gas subjected to the dust removal passes through the circulation line 18, is reheated to 200°C by the heat exchanger 15, and then supplied to the boiler 13.

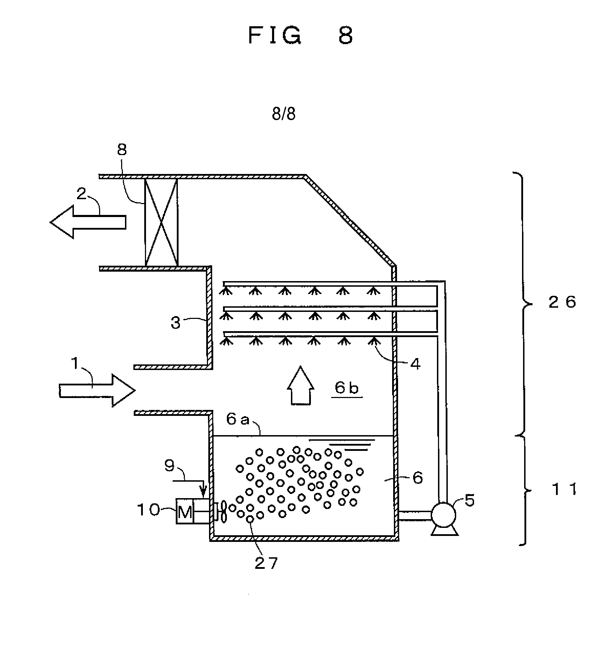

Furthermore, FIG. 8 shows a configuration of a desulfurization device in an oxygen combustion system according to the conventional technology. The desulfurization device 3 is mainly constituted of a spray nozzle 4 which sprays a desulfurization absorbent liquid 6 (which may be simply referred to as absorbent hereinafter), an absorbent circulation pump 5 which supplies the desulfurization absorbent 6 to the spray nozzle 4, a desulfurization absorption unit 26 with a mist eliminator 8, an oxidation gas supply unit 9 for a sulfurous acid generated in the desulfurization absorbent 6, a stirrer 10 configured to stir the desulfurization absorbent 6, an absorbent reservoir 11 configured to store the desulfurization absorbent and oxidize the sulfurous acid, and others. The desulfurization device 3 in the conventional system sprays an alkaline absorbent containing limestone and the like, whereby sulfur oxides such as SO₂ contained in boiler exhaust gas 1 are removed. To oxidize a sulfurous acid content (which may be simply referred to as sulfurous acid hereinafter) such as calcium sulfite generated by absorbing SO₂ in the boiler exhaust gas 1, oxidization gas 27, i.e. air is supplied from the oxidation gas supply unit 9. When the sulfurous acid is oxidized, it is recovered as gypsum.

### PRIOR ART DOCUMENTS

Patent Document 1: Unexamined Patent Application Publication No. 2007-147162
Patent Document 2: Unexamined Patent Application Publication No. 2007-147161
Patent Document 3: Unexamined Patent Application Publication No. 5-187609
Patent Document 4: Unexamined Patent Application Publication No. 5-71726

### DISCLOSURE OF THE INVENTION

### PROBLEMS TO BE SOLVED BY THE INVENTION

The oxidation gas (oxidation air) 27 supplied to the absorbent reservoir 11 changes to gas bubbles, disperses into the desulfurization absorbent 6, ascends toward liquid surface 6a, and contributes to an oxidation reaction of the sulfurous acid until it reaches the liquid surface 6a. When the oxidation gas 27 shifts to a gas phase 6b in the desulfurization absorption unit 26 after reaching the liquid surface 6a, the oxidation gas 27 hardly contributes to the oxidation reaction of the sulfurous acid.
At a time of supplying the oxidation gas (the oxidation air) 27 into the desulfurization absorbent 6, the oxidation air 27 is miniaturized as much as possible in order to relatively increase a contact area of the oxidation air 27 and the desulfurization absorbent 6, and prolong a residence time. However, after the oxidation gas reaches the liquid surface 6a, generation of the oxidation air 27 which shifts to the gas phase 6b in the desulfurization absorption unit 26 is unavoidable.
Therefore, to sufficiently effect the oxidation reaction of the sulfurous acid in the absorbent 6 in the absorbent reservoir 11, the oxidation gas (the oxidation air) 27 which is greatly excessive as compared with a stoichiometrically required amount of oxygen must be supplied from the oxidation gas supply unit 9. Therefore, a considerable amount of the oxidation gas (the oxidation air) 27 is discharged into the exhaust gas 2, and the exhaust gas 2 is diluted.

As described above, it has not been taken into consideration in the conventional technology that CO₂ concentration in the exhaust gas 2 decreases.
For example, if the concentration of CO₂ contained in the exhaust gas 1 supplied to an inlet of the desulfurization device 3 is 90%, the concentration of CO₂ contained in the exhaust gas 2 at an outlet of the desulfurization device 3 decreases to approximately 80% because of dilution by the oxidation air. Therefore, there is a problem that CO₂ recovery efficiency in the CO₂ recovery device 17 decreases. For example, when air (N₂: 79%, O₂: 21%) is used as the oxidation gas 27, the oxidation gas 27 gets mixed in with the exhaust gas 2 at the outlet of the desulfurization device, the CO₂ concentration decreases by approximately 10%, and hence a CO₂ recovery rate in the CO₂ recovery device 17 decreases by approximately 5%.

Additionally, in the coal-fired boiler 13, mercury contained in coal 25 is discharged into the exhaust gas. A part of the mercury is taken into the desulfurization absorbent 6 in the form of, mercury chloride, etc. during a process of an exhaust gas treatment. The mercury taken into the desulfurization absorbent 6 may be discharged again (or re-discharged hereinafter) into the gas phase 6b in the desulfurization absorption unit 26 in the form of, e.g., metallic mercury depending on conditions.
Therefore, the re-discharged mercury scatters and reaches the CO₂ recovery device 17 on the downstream side together with the exhaust gas 2 at the outlet of the desulfurization device. The CO₂ recovery device 17 has a process of compressing the exhaust gas 2, and there is concern that corrosion of constituent devices advances at an accelerated pace under the presence of the mercury. Besides, discharge of the harmful mercury to the outside of a plant system or into the air is not preferable either.

It is an object of the present invention to provide a wet flue gas desulfurization device, a combustion system using the wet flue gas desulfurization device, and a combustion method that prevent exhaust gas from being diluted with oxidation gas, avoid a reduction of CO₂ recovery rate in a CO₂ recovery device on the downstream side, and also prevent a mercury component in the exhaust gas taken into a desulfurization absorbent from scattering together with the exhaust gas at the outlet of the desulfurization device, reaching the CO₂ recovery device on the downstream side, or being directly discharged to the outside of a plant system or into the air.

### MEANS FOR SOLVING PROBLEMS

The problem of the present invention is solved by the following solving means.
A first aspect of the present invention provides a wet flue gas desulfurization device comprising: a desulfurization absorption unit (26) that allows gas-liquid contact of treatment target exhaust gas (1) and a desulfurization absorbent (6) containing a lime content; and a desulfurization absorbent reservoir (11) that accommodates the desulfurization absorbent (6) after the gas-liquid contact, wherein the desulfurization absorbent reservoir (11) is partitioned by a wall surface so as to insulate the inside from outside air and has: an oxidation gas supply unit (9) that supplies oxidation gas for oxidizing a sulfurous acid content in the desulfurization absorbent (6) through the wall surface; and an oxidation gas discharge unit (12) that is provided at a position higher than a liquid level of the desulfurization absorbent (6) and discharges the excess oxidation gas to the outside, and the desulfurization absorption unit (26) has a water seal tube (7) having a lower end opening portion (7b) at a position that is lower than the liquid level of the desulfurization absorbent (6) in the desulfurization absorbent reservoir (11) and close to the center of the desulfurization absorbent reservoir (11) apart from the wall surface where the oxidation gas supply unit (9) is provided.

A second aspect of the present invention provides a combustion system comprising: an oxygen production device (19) ; a combustion device (13) that combusts fuel by using oxygen produced by the oxygen production device (19); a denitration device (14); a heat exchanger (15) that preheats combustion gas used in the combustion device (13); a dust collection device (16); a wet flue gas desulfurization device (3) according to the first aspect; and a CO₂ recovery device (17), wherein the denitration device (14), the heat exchanger (15), the dust collection device (16), the wet flue gas desulfurization device (3), and the CO₂ recovery device (17) being sequentially arranged on a flow path of exhaust gas discharged from the combustion device (13) from the upstream side toward the downstream side, wherein a circulation line(18) which is branched from the exhaust gas flow path before a clarifying treatment performed by the wet flue gas desulfurization device (3) and through which the exhaust gas is recirculated to the combustion device (13) is provided, and an oxygen supply line (21) through which the oxygen produced by the oxygen production device (19) is supplied to an oxidation gas supply unit (9) of the wet flue gas desulfurization device (3) is provided, and an oxidation gas discharge unit (12) of the wet flue gas desulfurization device (3) is connected to the circulation line (18).

A third aspect of the present invention provides a combustion method comprising: producing oxygen by an oxygen production device (19), using the obtained oxygen for combustion of fuel in a combustion device (13), performing a denitration treatment, a preheating treatment of combustion air, a dust collection treatment, and a desulfurization treatment in a wet flue gas desulfurization device (3) according to the first aspect with respect to exhaust gas discharged from the combustion device (13), then carrying out a CO₂ recovery treatment; recirculating the exhaust gas before the wet flue gas desulfurization treatment to the combustion device; and supplying the oxygen produced by the oxygen production device (19) to an absorbent reservoir (11) of the wet flue gas desulfurization device (3) as oxidation gas, and returning the oxidation gas from an oxidation gas discharge unit(12) of the wet flue gas desulfurization device (3) to the combustion device (13).

### (Operation)

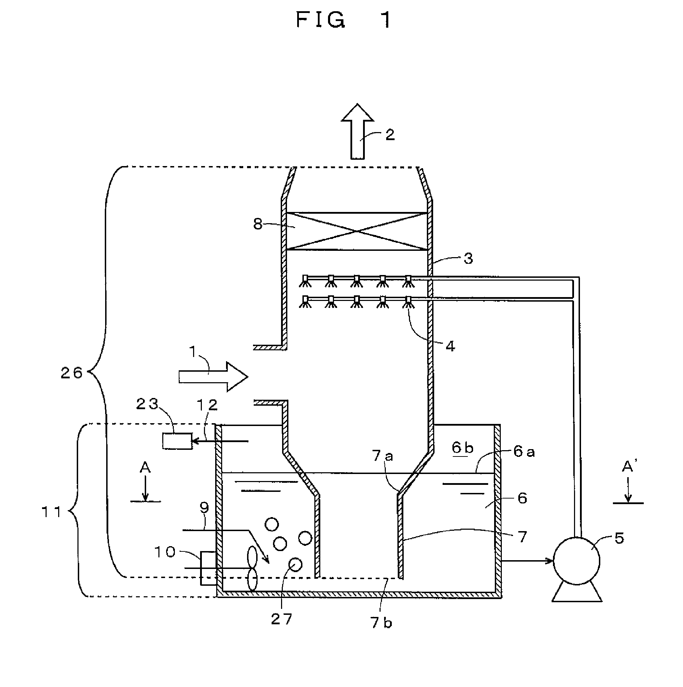

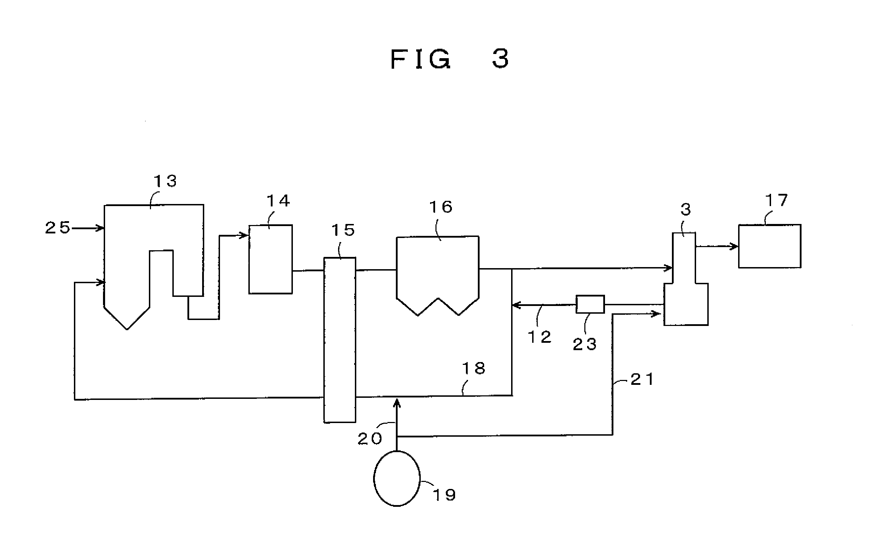

To make an operation of the present invention understandable, a structural example shown in FIG. 1 and FIG. 3 will now be described.
A gas phase 6b in an absorbent reservoir 11 of a desulfurization device 3 is isolated from a desulfurization absorption unit 26 by a partition wall 7a of a water seal tube 7.
A desulfurization absorbent 6 is sucked from the absorbent reservoir 11 by the absorbent circulation pump 5, sprayed to the desulfurization absorption unit 26 through a spray nozzle 4, and circulated mainly on the outer side of a wall surface of a water seal tube 7 by a stirrer 10 in the absorbent reservoir 11. Therefore, since the desulfurization absorbent 6, which falls from the desulfurization absorption unit 26 of the desulfurization device 3 and flows into the water seal tube 7, flows in one direction from the upper side toward the lower side, there are characteristics that a sedimentation rate of the desulfurization absorbent 6 is high in the water seal tube 7 and gas bubbles hardly ascend.

Therefore, the partition wall 7a of the water seal tube 7 functions as a barrier with respect to a movement that oxidation gas 27 supplied from the oxidation gas supply unit 9 to the desulfurization absorbent 6 flows toward the desulfurization absorption unit 26, and this movement is also restricted by a downward flow of the desulfurization absorption 6 inside of the water seal tube 7.
Therefore, the oxidation gas 27 of a sulfurous acid generated in the absorbent of the desulfurization device 3 is prevented from getting mixed in with the exhaust gas 2 at the outlet of the desulfurization device, and CO₂ concentration at an inlet of a CO₂ recovery device 17 (see FIG. 3) arranged on the downstream side of the desulfurization device 3 is prevented from decreasing, thereby effecting highly efficient CO₂ recovery.

Mercury in the combustion exhaust gas discharged by combustion of the coal is absorbed by the absorbent in the desulfurization device 3, and it may be re-discharged into a gas phase depending on conditions. As described above, in a coal-fired boiler 13 (see FIG. 3), a countermeasure must be taken to prevent the re-discharged mercury from scattering together with the exhaust gas 2 at the outlet of the desulfurization device 3, reaching the CO₂ recovery device 17 on the downstream side, or being directly discharged to the outside of a plant system or into the air.

In the present invention, as described above, there are characteristics that a flow of the absorbent, which falls from the desulfurization absorption unit 26 of the desulfurization device 3 and flows into the water seal tube 7, becomes a flow in one direction from the upper side toward the lower side, a sedimentation rate of the absorbent is high in the water seal tube 7, and gas bubbles hardly ascend. Further, since the water seal tube 7 is inserted in the vicinity of a bottom portion of the absorbent reservoir 11 below the water surface, the absorbent in the desulfurization device 3 can be easily allowed to flow down to the absorbent reservoir 11, the falling absorbent contributes to stirring of the desulfurization absorbent 6 in the absorbent reservoir 11, and hence the number of the stirrers 10 can be reduced or the size of the stirrer 10 can be miniaturized, and the cost reduction can be expected.
Furthermore, for example, even if the mercury moves into the oxidation gas 27 and is discharged into the gas phase, the mercury can be prevented from scattering together with the exhaust gas 2 at the outlet of the desulfurization device and reaching the CO₂ recovery device 17 on the downstream side.

The gas phase portion 6b in the absorbent reservoir 11 is isolated from the gas phase portion in the desulfurization absorption unit 26 through the partition wall 7a of the water seal pipe 7, and hence the mercury re-discharged here can be easily removed by a mercury removal device 23 connected to an oxidation gas outlet pipe 12. Therefore, the re-discharged mercury does not diffuse into the air or to the outside of the system.
When the oxidation gas 27 supplied to the absorbent reservoir 11 is substituted by high-oxygen gas produced in an oxygen production device 19, since an amount of supplied gas can be reduced as compared with that in a situation where the oxidation gas is air, the number of air blowers for oxidation can be reduced or a capacity of each blower can be decreased. Furthermore, a liquid level 6a of the desulfurization absorbent reservoir 11 rises, and a problem, e.g., overflowing to the outside of the desulfurization absorbent reservoir 11 can be avoided.

As described above, in the conventional technology, to sufficiently effect an oxidation reaction of the sulfurous acid in the absorbent in the absorbent reservoir 11, it is necessary to supply from the oxidation gas supply unit 9 oxidation air which is greatly excessive as compared with a stoichiometrically required amount of oxygen.
When the oxidation air which is the oxidation gas 27 supplied from the oxidation gas supply unit 9 is substituted by high-oxygen gas produced by an oxygen production device 19, a supply amount of the oxidation gas can be greatly reduced. That is, it is possible to reduce the supply amount of the gas which corresponds to an amount of the components other than oxygen, e.g., nitrogen which does not at least contribute to the oxidation reaction from air.

Therefore, supply power of, a compressor, etc. that is used for supplying the oxidation gas from the oxidation gas supply unit 9 can be reduced. Furthermore, since a diameter of a pipe in the oxidation gas supply unit 9 can be reduced without (greatly) increasing a pressure loss, gas bubbles can be further miniaturized. As a synergetic effect obtained from this miniaturization, the oxidation reaction of the sulfurous acid can readily advance, and hence it is possible to reduce a supply amount of the oxidation gas beyond an amount obtained by simply eliminating nitrogen from air.
Moreover, stirring and miniaturization of the gas bubbles by the stirrer 10 used in the desulfurization absorbent reservoir 11 can easily advance.

Even if the oxidation gas is discharged into the exhaust gas through an opening portion at a lower end (a lower end opening portion 7b of the water seal tube 7) of the desulfurization absorption unit 26, an amount of the discharge is alleviated, and the exhaust gas is hardly diluted.
Additionally, the excess oxygen discharged into the gas phase 6b without being used for oxidation of the sulfurous acid can be returned to a circulation line of the oxygen combustion system, and it can be used as combustion gas in the boiler 13. Therefore, the oxygen generated by the oxygen production device 19 can be fully effectively used.

### EFFECTS OF THE INVENTION

According to the present invention, the following effects can be obtained.
(1) Since the oxidation gas 27 of the sulfurous acid generated in the desulfurization absorbent 6 does not get mixed in with the gas 2 at the outlet of the desulfurization device, there can be obtained the effect of avoiding a reduction in CO₂ concentration in the gas at the inlet of the CO₂ recovery device 17 and a reduction in recovery rate of CO₂.
(2) The metallic mercury re-discharged from the desulfurization absorbent 6 can be prevented from getting mixed in with the gas 2 at the outlet of the desulfurization device. Further, there can be obtained the effect of avoiding discharge of the mercury re-discharged from the desulfurization absorbent 6 to the outside of the system or into the air and outflow of the same to the CO₂ recovery device on the downstream side.
(3) When oxygen having high concentration is used as the oxidation gas of the sulfurous acid and the excess oxygen, which was not used for oxidation of the sulfurous acid, is supplied to the circulation line 18 through which the oxygen is supplied to the combustion device 13, a supply gas amount can be reduced more than that in a situation where air is used as the oxidation gas. Therefore, gas supply power can be reduced. In addition, a rise of a desulfurization absorbent surface can be avoided, a size of the absorbent reservoir can be reduced, and a facility cost can be decreased. Further, since the excessively supplied oxygen can be used as the combustion gas for the boiler 13, excess oxygen is not used, and the effect of reducing facility cost can be obtained.

### BRIEF DESCRIPTION OF THE DRAWINGS

FIG. 1 is a view showing a configuration of a desulfurization device in an oxygen combustion system according to an embodiment of the present invention;
FIG. 2 is a an arrow view of a circular cross section (FIG. 2(a)) and an arrow view of a square cross section (FIG. 2(b)) taken along a line A-A' in FIG. 1;
FIG. 3 is a view showing a configuration of an oxygen combustion system according to an embodiment of the present invention;
FIG. 4 is a view showing a configuration of an oxygen combustion system according to an embodiment of the present invention;
FIG. 5 is a view showing a configuration of an oxygen combustion system according to an embodiment of the present invention;
FIG. 6 is a view showing a configuration of an oxygen combustion system according to an embodiment of the present invention;
FIG. 7 is a view showing a configuration of an oxygen combustion system according to a conventional technology; and
FIG. 8 is a view showing a configuration of a desulfurization device according to the conventional technology.

### DETAILED DESCRIPTION OF THE PREFERRED EMBODIMENTS

An embodiment according to the present invention will now be described with reference to the accompanying drawings.
A description on structures and operations common to the conventional technology will be omitted.

### (Desulfurization Device)

FIG. 1 shows a configuration of a desulfurization device in an oxygen combustion system according to this embodiment.
A desulfurization device 3 has an integral configuration constituted of a desulfurization absorbent unit 26 and an absorbent reservoir 11, and a lower end of the desulfurization absorption unit 26 is provided below a water surface (a liquid surface 6a) of an absorbent in the desulfurization absorbent reservoir 11 to form a so-called water seal tube 7. It is to be noted that the desulfurization absorbent unit 26 means a void tower region where a desulfurization reaction is effected by boiler exhaust gas 1 which is introduced into the desulfurization device 3 and a desulfurization absorbent 6 sprayed from a spray nozzle 4 and a water phase region which corresponds to the inside of the water seal tube 7 inserted in the absorbent reservoir 11 where the desulfurization absorbent 6 is stored and extends to a lower end opening portion 7b, and the absorbent reservoir 11 means a region constituted of a liquid phase 6a where the desulfurization absorbent 6 that has flowed out from the water seal tube 7 convects and a gas phase 6b.

The desulfurization device 3 is mainly constituted of the spray nozzle 4 that sprays the desulfurization absorbent 6 with respect to an upward flow of the boiler exhaust gas 1, an absorbent circulation pump 5 which supplies the desulfurization absorbent 6 to the spray nozzle 4, the water seal tube 7 which leads the downwardly flowing desulfurization absorbent 6 into the absorbent reservoir 11, an oxidation gas supply unit 9 which leads oxidation gas into the desulfurization absorbent 6 in the absorbent reservoir 11, a stirrer 10 that stirs the desulfurization absorbent 6 in the absorbent reservoir 11, an oxidation gas outlet pipe 12 that communicates with the outside through the gas phase 6b in the absorbent reservoir 11, a mist eliminator 8 provided in the vicinity of an exhaust gas outlet of the desulfurization absorption unit 26, and others.
A cross-sectional area of an opening portion at a lower end of the desulfurization absorption unit 26 is set to be equal to or smaller than a cross-sectional area of the absorbent reservoir 11, and the water seal tube 7 having the opening portion 7b at a lower portion is provided at a lower end portion of the desulfurization absorption unit 26.

The lower end opening portion 7b of the water seal tube 7 is provided at a position lower than the liquid level (a liquid surface) 6a of the desulfurization absorbent during a desulfurizing operation of the absorbent reservoir 11.
Further, the lower end opening portion 7b is opened at a position that is apart from a sidewall surface of the absorbent reservoir 11 in which the oxidation gas supply unit 9 is provided and close to the center of the desulfurization absorbent reservoir 11, and it is opened at the bottom portion of the water seal tube 7 in the absorbent reservoir 11 of the oxidation gas supply unit 9.

Since the oxidation gas outlet pipe 12 communicates with the outside from the sidewall portion of the absorbent reservoir 11 through the gas phase 6b in the absorbent reservoir 11, the oxidation gas 27 that is not used for oxidation of the sulfurous acid contained in the absorbent in the absorbent reservoir 11 is discharged to the outside of the system without getting mixed in with the exhaust gas 2 at the outlet of the exhaust gas desulfurization device.

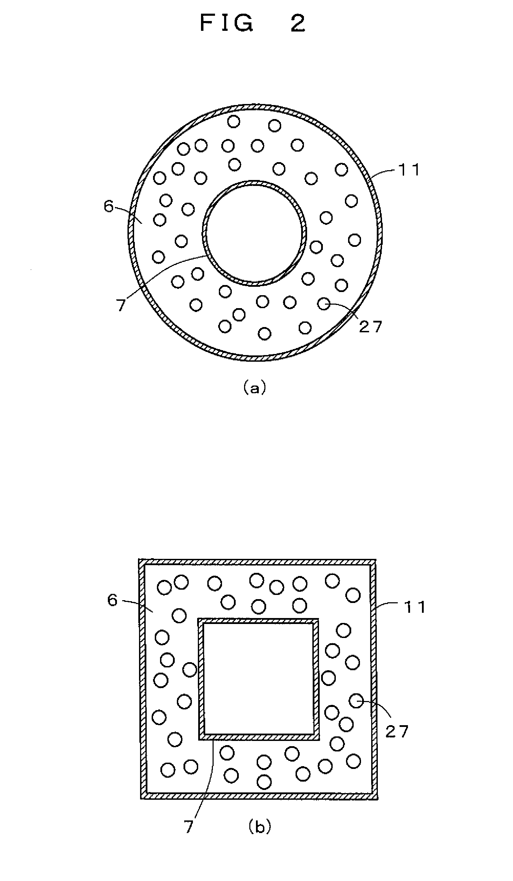

FIG. 2(a) shows a configuration when each of the water seal tube 7 and the desulfurization absorbent reservoir 11 has a circular shape as seen in a planar view as an embodiment showing a cross-sectional arrow view taken along a line A-A' in FIG. 1. Droplets sprayed from the spray nozzle 4 pass through the water seal tube 7 and are supplied to the absorbent 6 in the desulfurization absorbent reservoir 11. The oxidation gas 27 is supplied to the absorbent 6 from the oxidation gas supply unit 9.
Further, FIG. 2 (b) shows an example where each of the water seal tube 7 and the desulfurization absorbent reservoir 11 has a shape other than the circular shape, e.g., a square shape as the embodiment showing a cross-sectional arrow view taken along the line A-A' in FIG. 1. As described above, it is not necessary to be fixated on the cross-sectional shape in the arrow view taken along the line A-A' in particular and, when an area of the cross section of the water seal tube 7 is relatively small, a space to which the oxidation gas 27 is supplied increases, and the oxidation efficiency of the sulfurous acid is enhanced.

In a conventional desulfurization device 3, oxidation gas 27 gets mixed in with the exhaust gas 2 at the outlet of the desulfurization device. For example, when air is used as the oxidation gas 27, since CO₂ concentration is reduced by approximately 10%, a CO₂ recovery rate in a CO₂ recovery device 17 decreases by approximately 5%. On the other hand, when the desulfurization device 3 having the water seal tube 7 according to the present invention is used, the excess oxidation gas 27 that is not used for oxidation of the sulfurous acid generated in the desulfurization absorbent does not get mixed in with the exhaust gas 2 at the outlet of the desulfurization device, and hence the concentration of CO₂ at the inlet of the CO₂ recovery device 17 can be prevented from being lowered. Therefore, the decrease in CO₂ recovery rate of the CO₂ recovery device 17 can be avoided.

A mercury removal device 23 is connected to the oxidation gas outlet pipe 12. At a time of oxidizing the sulfurous acid generated from the desulfurization absorbent 6 with air, gas containing high-concentration oxygen, which was not used for the oxidation, is discharged into the atmosphere from the oxidation gas outlet pipe 12. At the moment of desulfurization, metallic mercury may be re-discharged due to, e.g., an influence of the sulfurous acid generated in the desulfurization absorbent 6 in some cases.
The mercury removal device 23 connected to the oxidation gas outlet pipe 12 captures the metallic mercury by using, e.g., a gold chip (a metal which forms mercury and amalgam and is fixed, e.g., gold (Au)), whereby the metallic mercury can be prevented from being discharged into air.

As the configuration shown in FIG. 1, a configuration that the desulfurization absorption unit 26 of the desulfurization device 3 is supported right over the absorbent reservoir 11 by, e.g., a non-illustrated steel construction is shown, but the present invention is not necessarily restricted to the configuration where both the members are arranged in the vertical direction in this manner. As long as it has a configuration that the oxidation gas 27 hardly flows out toward the desulfurization absorption unit 26 through the water seal tube 7, e.g., these members may be arranged in parallel.

### (Oxygen Combustion System)

FIG. 3 shows an embodiment of a combustion system using the desulfurization device 3 according to the present invention. This embodiment exhibits a system configuration including an exhaust gas treatment system when the oxidation gas 27 of the desulfurization device 3 depicted in FIG. 1 is high-concentration oxygen.

The high-concentration oxygen (e.g., gas having oxygen concentration of 95% or above obtained by separating nitrogen from air) is supplied from an oxygen production device 19 to the oxidation gas supply unit 9 of the desulfurization device 3, and the gas containing oxygen that was not used for oxidation is supplied to a circulation line 18 from the oxidation gas outlet pipe 12 at a time of oxidizing the sulfurous acid generated from the desulfurization absorbent 6.
It is to be noted that a starting point of the circulation line 18 may be set at any position on an exhaust gas flow path from a denitration device 14 to the CO₂ recovery device 17 shown in FIG. 3, and a heat exchanger 15 does not have to be interposed along the way.

Further, although a conformation that an oxygen supply line 20 is connected to the circulation line 18 from the oxygen production device 19 is shown, a connecting region is not restricted to the circulation line 18. The present invention is not restricted to the single circulation line 18, the plurality of circulation lines 18 may be provided, or the circulation line 18 may branch to be connected to a supply system leading to fuel 25, and the circulation line 18 is not limited to this conformation as long as it is configured to use oxygen produced by the oxygen production device 19 and the combustion exhaust gas as the combustion gas for the boiler 13.

When the oxidation gas 27 is air, since the oxygen concentration in the air is approximately 21%, the gas that is not used for oxidation such as N₂ contained in the air is excessively supplied. Since the desulfurization absorbent 6 in the absorbent reservoir 11 contains a large quantity of gas bubbles, a liquid level of the absorbent rises, and overflow to the outside of the device is apt to occur. Avoiding this overflow results in an increase in size of the absorbent reservoir 11, and the facility cost is raised.

On the other hand, when gas containing high-concentration oxygen is used as the oxidation gas 27, a supply amount of the oxygen can be reduced to approximately 1/5 of a supply amount of the air, gas bubbles in the desulfurization absorbent 6 in the absorbent reservoir 11 are reduced, and a height of the liquid level 6a is also lowered.
Therefore, the size of the absorbent reservoir 11 can be reduced as compared with that in the conventional desulfurization device 3, and the facility cost of the desulfurization device 3 can be decreased.
At this time, assuming that SO₂ concentration in the exhaust gas 1 at the inlet of the desulfurization device 3 is 500 to 10,000 ppm, an amount of O₂ used for the oxidation of the sulfurous acid contained in the desulfurization absorbent 6 is 0.2 to 2.5% with respect to a mount of O₂ used for combustion.

As described above, in the oxidation gas 27 supplied to the desulfurization absorbent 6 with respect to the oxidation reaction of the sulfurous acid, it is unavoidable to produce gas that reaches the liquid level 6a of the absorbent reservoir 11 and changes to the gas phase 6b.
To sufficiently effect the oxidation reaction of the sulfurous acid in the absorbent in the absorbent reservoir 11, it is necessary to supply from the oxidation gas supply unit 9 the oxidation gas that is excessive as compared to an amount of oxygen stoichiometrically required.
In the conventional desulfurization device and combustion system, if the oxygen is supplied from the oxidation gas supply unit 9, an amount of the oxygen excessively supplied is wastefully discharged together with the exhaust gas at the outlet of the desulfurization device 3.

However, in the desulfurization device 3 and the combustion system according to this embodiment, a substantially all amount of the oxidation gas 27 excessively supplied is discharged to the gas phase 6b. Since the gas phase 6b is isolated by the wall surface of the water seal tube 7, it does not get mixed in with the exhaust gas 2 at the outlet of the desulfurization device 3.
Since the gas phase 6b communicates with the oxidation gas outlet pipe 12 and this pipe 12 is connected to the circulation line 18, the excessive oxygen in the desulfurization device 3 can be all used as the combustion gas in the boiler 13 through these paths.
In this manner, the amount of the oxygen supplied from the oxygen production device 19 to the desulfurization device 3 can be minimized. Furthermore, since the air is not supplied to the exhaust gas in the desulfurization system according to this embodiment, the CO₂ concentration in the exhaust gas at the outlet of the boiler 13 can be prevented from being lowered.

As shown in FIG. 3, when the mercury removal device 23 is connected to the oxidation gas outlet pipe 12 and the metallic mercury is removed, the metallic mercury re-discharged from the desulfurization absorbent 6 is not recirculated, and impurities can be prevented from entering the CO₂ recovery device 17.
It is to be noted that the mercury re-discharged to the gas phase 6b in the absorbent reservoir 11 is returned to the circulation line 18 even though the mercury removal device 23 is omitted, and hence discharge into the atmosphere or the outside of the system can be avoided.

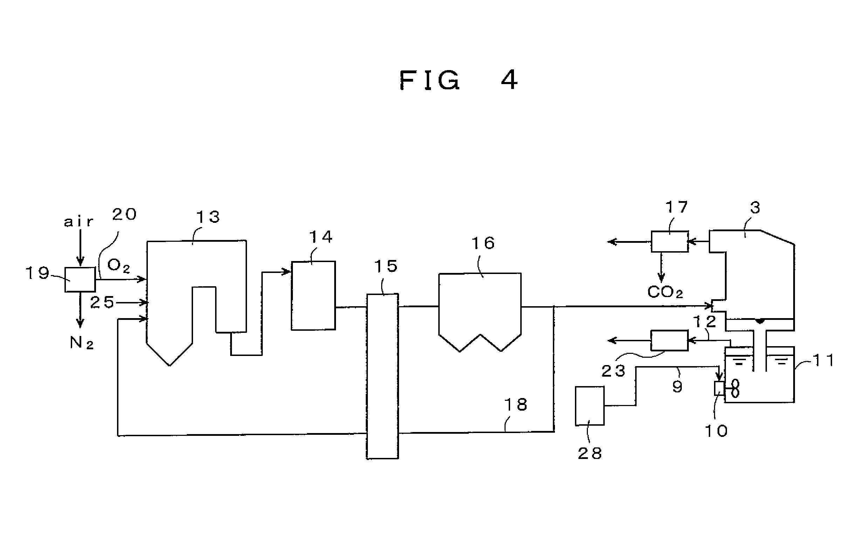

Additionally, FIG. 4 shows another embodiment having a configuration in which the desulfurization device 3 and the absorbent reservoir 11 depicted in FIG. 1 are incorporated in the oxygen combustion system. The exhaust gas treatment device is mainly constituted of a boiler 13, a denitration device 14, a heat exchanger 15, a dust collection device 16, a desulfurization device 3, a CO₂ recovery device 17, a circulation line 18, an oxygen production device 19, an oxygen supply line 20, and others.

Fuel 25 such as coal is combusted with oxygen in the boiler 13, and exhaust gas is generated. At this time, the oxygen is supplied to the boiler 13 from the oxygen supply line 20 and the like by the oxygen production device 19. The denitration device 14 decomposes NOx (nitrogen oxide) contained in the gas discharged from the boiler 13. Further, a temperature of the gas discharged from the denitration device 14 is adjusted to 200°C to 160°C by the heat exchanger 15, and smoke dust is removed by the dust collection device 16. A part of the gas subjected to the dust removal is supplied to the desulfurization device 3, then SO₂ is removed, and CO₂ is recovered by the CO₂ recovery device 17. Furthermore, a part of the exhaust gas discharged from the dust collection device 16 passes through the circulation line 18 without being supplied to the desulfurization device 3, and it is reheated to 200°C by the heat exchanger 15 and then supplied to the boiler 13. At a time of oxidizing the sulfurous acid, which is generated from the desulfurization absorbent 6 in the absorbent reservoir 11 of the desulfurization device 3, by using air, the air that is not used for oxidation is discharged into the atmosphere from the oxidation gas outlet pipe 12.

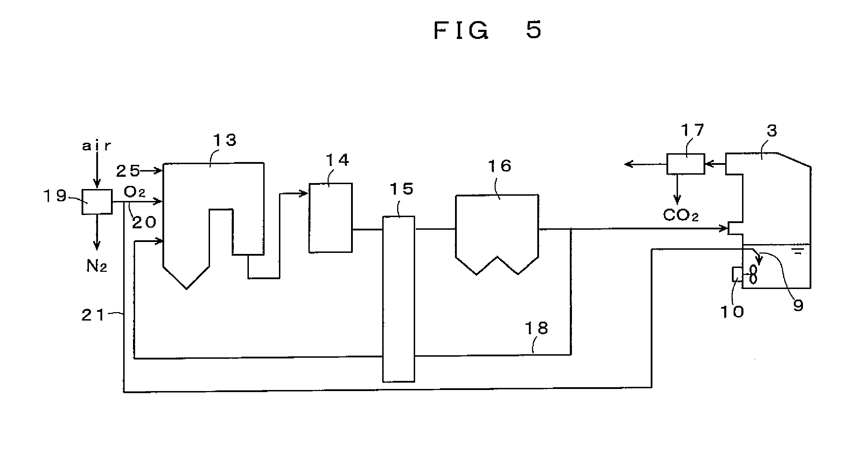

FIG. 5 shows another embodiment of the oxygen combustion system according to the present invention. This embodiment exhibits a configuration of an exhaust gas treatment system when the oxidation gas 27 of the desulfurization device 3 according to the conventional technology depicted in FIG. 8 is high-concentration oxygen. It is to be noted that the desulfurization device 3 in FIG. 5 may be the desulfurization absorbing tower shown in FIG. 1. In the exhaust gas treatment system shown in FIG. 5, when high-concentration oxygen is used as the oxidation gas 27, since a supply amount of the oxygen can be reduced to approximately 1/5 of a supply amount of air, a blower is no longer necessary, or a capacity of the blower can be reduced, and hence the facility cost of the desulfurization device 3 can be decreased. Furthermore, since air does not get mixed in with exhaust gas, a reduction in CO₂ concentration of the exhaust gas at the outlet of the boiler 13 can be avoided.

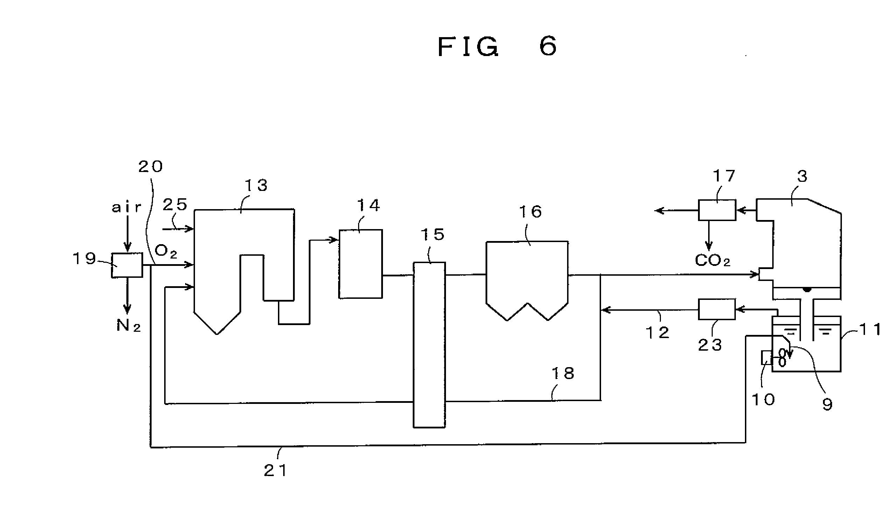

FIG. 6 shows another embodiment of an oxygen combustion system according to the present invention. This embodiment has a configuration that oxygen is supplied from an oxygen production device 19 to an oxidation gas supply unit 9 provided in an absorbent reservoir 11 in the desulfurization device 3 according to the present invention depicted in FIG. 1 and an oxidation gas outlet pipe 12 is connected to a circulation line 18. As a result, when excess oxidation oxygen discharged from the oxidation gas outlet pipe 12 is supplied to the circulation line 18, the excess oxidation oxygen at a time of combusting coal with oxygen in a boiler 13 can be reused, and hence a consumption of the oxygen generated by the oxygen production device 19 can be minimized.

### EXPLANATIONS OF LETTERS OR NUMERALS

- 1: boiler exhaust gas
- 2: exhaust gas at the outlet of the desulfurization device
- 3: desulfurization device
- 4: spray nozzle
- 5: absorbent circulation pump
- 6: desulfurization absorbent liquid
- 7: water seal tube
- 8: mist eliminator
- 9: oxidation gas supply unit
- 10: stirrer
- 11: absorbent reservoir
- 12: oxidation gas outlet pipe
- 13: boiler
- 14: denitration device
- 15: heat exchanger
- 16: dust collection device
- 17: CO₂ recovery device
- 18: circulation line
- 19: oxygen production device
- 20: oxygen supply line
- 21: oxygen supply line
- 23: mercury removal device
- 25: fuel such as coal
- 26: desulfurization absorption unit
- 27: oxidation gas (gas bubbles of air or oxygen)

## Claims

1. A wet flue gas desulfurization device comprising: a desulfurization absorption unit (26) that allows gas-liquid contact of treatment target exhaust gas (1) and a desulfurization absorbent (6) containing a lime content; and a desulfurization absorbent reservoir (11) that accommodates the desulfurization absorbent (6) after the gas-liquid contact,
wherein the desulfurization absorbent reservoir (11) is partitioned by a wall surface so as to insulate the inside from outside air and has: an oxidation gas supply unit (9) that supplies oxidation gas for oxidizing a sulfurous acid content in the desulfurization absorbent (6) through the wall surface; and an oxidation gas discharge unit (12) that is provided at a position higher than a liquid level of the desulfurization absorbent (6) and discharges the excess oxidation gas to the outside, and
the desulfurization absorption unit (26) has a water seal tube (7) having a lower end opening portion (7b) at a position that is lower than the liquid level of the desulfurization absorbent (6) in the desulfurization absorbent reservoir (11) and close to the center of the desulfurization absorbent reservoir (11) apart from the wall surface where the oxidation gas supply unit (9) is provided.

2. A combustion system comprising: an oxygen production device (19); a combustion device (13) that combusts fuel by using oxygen produced by the oxygen production device (19); a denitration device (14); a heat exchanger (15) that preheats combustion gas used in the combustion device (13); a dust collection device (16); a wet flue gas desulfurization device (3) according to claim 1; and a CO₂ recovery device (17), wherein the denitration device (14), the heat exchanger (15), the dust collection device (16), the wet flue gas desulfurization device (3), and the CO₂ recovery device (17) being sequentially arranged on a flow path of exhaust gas discharged from the combustion device (13) from the upstream side toward the downstream side,
wherein a circulation line (18) which is branched from the exhaust gas flow path before a clarifying treatment performed by the wet flue gas desulfurization device (3) and through which the exhaust gas is recirculated to the combustion device (13) is provided, and
an oxygen supply line (21) through which the oxygen produced by the oxygen production device (19) is supplied to an oxidation gas supply unit (9) of the wet flue gas desulfurization device (3) is provided, and an oxidation gas discharge unit (12) of the wet flue gas desulfurization device (3) is connected to the circulation line (18).

3. A combustion method comprising:
producing oxygen by an oxygen production device (19), using the obtained oxygen for combustion of fuel in a combustion device (13), performing a denitration treatment, a preheating treatment of combustion air, a dust collection treatment, and a desulfurization treatment in a wet flue gas desulfurization device (3) according to claim 1 with respect to exhaust gas discharged from the combustion device (13), then carrying out a CO₂ recovery treatment;
recirculating the exhaust gas before the wet flue gas desulfurization treatment to the combustion device; and
supplying the oxygen produced by the oxygen production device (19) to an absorbent reservoir (11) of the wet flue gas desulfurization device (3) as oxidation gas, and returning the oxidation gas from an oxidation gas discharge unit (12) of the wet flue gas desulfurization device (3) to the combustion device (13).
